## Europäisches Patentamt

## European Patent Office

## Office européen des brevets

(19)

(11) Veröffentlichungsnummer: **0 134 534**
**B1**

(12) # EUROPÄISCHE PATENTSCHRIFT

(45) Veröffentlichungstag der Patentschrift:
06.04.88

(51) Int. Cl.⁴: **G 21 C 17/00,** G 01 N 29/00

(21) Anmeldenummer: **84109120.0**

(22) Anmeldetag: **01.08.84**

(54) **Aussen an einem Rohr ansetzbarer Prüfmanipulator.**

(30) Priorität: **16.08.83 DE 3329483**

(43) Veröffentlichungstag der Anmeldung:
**20.03.85 Patentblatt 85/12**

(45) Bekanntmachung des Hinweises auf die Patenterteilung:
**06.04.88 Patentblatt 88/14**

(84) Benannte Vertragsstaaten:
**DE FR GB NL SE**

(56) Entgegenhaltungen:
**EP-A-0 025 213**
**DE-A-2 726 612**
**DE-A-2 936 660**
**DE-A-3 049 065**
**FR-A-2 344 015**
**US-A-3 921 440**

(73) Patentinhaber: **Siemens Aktiengesellschaft Berlin und München, Wittelsbacherplatz 2, D-8000 München 2 (DE)**

(72) Erfinder: **Gugel, Erich, Fürther Strasse 17, D-8501 Kalchreuth (DE)**
Erfinder: **Haas, Erich, Steinweg 13, D-8566 Leinburg (DE)**

LIBER, STOCKHOLM 1988

EP 0 134 534 B1

## Beschreibung

Die Erfindung bezieht sich auf einen außen an einem Rohr ansetzbaren Prüfmanipulator, vorzugsweise zum Ultraschallprüfen von Schweißnähten.

Ein außen an der Kühlmittelleitung eines Reaktordruckbehälters ansetzbarer Prüfmanipulator, mit dem die Schweißnaht, mit der die Kühlmittelleitung am Reaktordruckbehälter angeschweißt ist, geprüft werden kann, ist durch die DE-A 27 26 612 bekannt. Bei diesem Prüfmanupulator, der den beengten Platzverhältnissen im Bereich des Leitungsdurchbruchs im biologischen Schild Rechnung trägt, wird ein sogenannter Sattel auf der zu prüfenden Kühlmittelleitung festgespannt. Auf diesem Sattel ist ein Schlitten parallel zur Rohrlängsachse verschiebbar gelagert. Der Schlitten ist Träger der Prüfkopfhalterung. Letztere ist an einen am Schlitten in Umfangsrichtung drehbar gelagerten Ringrahmen befestigt. Mit dieser Konstruktion kann man in den schmalen Ringspalt zwischen der Kühlmittelleitung und dem biologischen Schild hereinfahren und die Anschlußnähte der Kühlmittelleitung am Reaktordruckbehälter, sogenannte Rohranschlußnähte prüfen.

Bei einer ähnlichen Vorrichtung ohne Sattel ist am Umfang eines zu prüfenden Rohres ein Ring mit einer Verzahnung befestigt, an dem eine Auslegereinheit radial verschiebbar gelagert ist. Die Auslegereinheit hat einen axial verschiebbaren Schlitten mit einem Prüfsystemträger und einer Prüfkopfhalterung EP-A 0 025 213).

Es ist eine Eigenart der bekannten Prüfmanipulatoren, daß sie gerade wegen Eigenschaften, die sie für die Prüfung von Rohranschlußnähten prädestinieren, weniger gut für die Prüfung im Bereich kurzer gerader Rohrabschnitte oder an thermisch isolierten Rohren geeignet sind um umgekehrt.

Der Erfindung liegt die Aufgabe zugrunde, den Aufwand bei der Überprüfung von Schweißnähten an Rohrleitungen zu vermindern. Insbesondere sollte ein Prüfmanipulator entwickelt werden, mit dem möglichst alle an den Rohren eines Kraftwerks vorkommenden Schweißnähte gleichermaßen gut überprüfbar sind. Dabei sollte der Platzbedarf für die Anbrigung des Prüfmanipulators an einer Rohrleitung möglichst gering sein, um beispielsweise bei wärmeisolierten Rohrleitungen nicht allzu große Teile der Wärmeisolation entfernen zu müssen. Der Prüfmanipulator sollte außerdem möglichst einfach am Prüfobjekt zu installieren sein. Schließlich sollte der Prüfmanipulator bei der Wiederholungsprüfung qualitativ und quantitativ exakt vergleichbare Meßergebnisse liefern, um in der Zwischenzeit erfolgte Veränderungen schnell und einfach feststellen zu können.

Diese Aufgabe wird gelöst durch einen außen an einem Rohr an setzbaren Prüfmanipulator, vorzugsweise zum Ultraschallprüfen von Schweißnähten, enthaltend einen in Umfangs- und Achsrichtung am Rohr verfahrbaren Prüfsystemträger, mindestens eine an diesem befestigbare Prüfkopfhalterung, eine Antriebs- und Positioniereinrichtung, einen das zu prüfende Rohr umschließenden, geteilten Ring, der mit Befestigungsmitteln für den Prüfsystemträger und Spannpratzen ausgestaltet ist und dem ein Segment zugeordnet ist, das mit Mitteln zum Anflanschen entweder einer Auslegereinheit oder eines auf einem Sattel axial zum Rohr verfahrbaren Schlittens ausgestaltet ist, wobei Ring und Segment relativ zueinander bewegbar sind, bei der Prüfung von im Rohrstrang gelegenen Schweißnähten der Ring über die Spannpratzen unmittelbar am zu prüfenden Rohr zu einer am Rohr befestigten Justiermarke zentriert befestigbar und die Auslegereinheit mitsamt dem Prüfsystemträger und der Prüfkopfhalterung an dem längs des Umfangs des Ringes verschiebbar gelagerten Segment anflanschbar ist oder alternativ bei der Prüfung von sogenannten Rohranschlußnähten der Ring mit dem daran befestigten Prüfsystemträger am Segment in Umfangsrichtung um das Rohr drehbar gelagert ist und das Segment an dem Schlitten befestigt ist, der auf dem zu einer am Rohr befestigten Justiermarke zentriert am Rohr befestigbaren Sattel angeordnet ist.

Bei dieser unterschiedlichen Zuordnung der einzelnen Bauelemente des Prüfmanipulators läßt sich dieser ebensogut an kurzen Abschnitten des Rohrstranges, in denen zuvor die das Rohr umgebende Wärmeisolierung abgenommen wurde, einsetzen, wie auch zur Prüfung von sogenannten Rohranschlußnähten. Letztere sind Schweißnähte, die ein Rohr mit einem Behälter verbinden. So ist beispielsweise bei einem Reaktordruckbehälter, wo die Kühlmittelrohre durch eine Wärmeisolierung und durch einen biologischen Schild geführt sind, ein in axialer Richtung verhältnismäßig tiefer Ringspalt vorhanden, in welchem der Platz in radialer Richtung äußerst beengt ist.

Der Einsatzbereich des Prüfmanipulators läßt sich noch beträchtlich erweitern, wenn in erfindungsgemäßer Ausgestaltung der Erfindung an unterschiedliche Rohrdurchmesser angepaßte Ringe, Segmente und Prüfsystemträger vorgesehen sind, an die die übrigen Bauelemente, wie Antriebs- und Positioniereinheit, Sattel und Auslegereinheit, passen. Hierdurch lassen sich mit dem Prüfmanipulator, ungeachtet der jeweiligen Rohrdurchmesser, die Schweißnähte praktisch aller Rohre eines Kraftwerks überprüfen.

Weitere Einzelheiten der Erfindung werden anhand der Figuren an zwei Ausführungsbeispielen erläutert. Es zeigen:

Fig. 1 eine Seitenansicht des auf einem Rohrstutzen montierten Prüfmanipulators in seiner Arbeitsposition bei der Prüfung einer Rohranschlußnaht,

Fig. 2 eine Aufsicht auf den Prüfmanipulator der Fig. 1 bei weggelassenem Prüfsystemträger,

Fig. 3 einen Schnitt längs der Linie III-III der Fig. 2,

Fig. 4 eine Seitenansicht eines in einen Reaktordruckbehälter mündenden Rohres mit einer mit dem Prüfmanipulator der Fig. 1 bis 3 zu prüfenden Rohranschlußnaht,

Fig. 5 den auf dem Rohr der Fig. 4 teilweise montierten Prüfmanipulator,

Fig. 6 den auf dem Rohr der Fig. 4 weitgehend vormontierten Prüfmanipulator,

Fig. 7 den in seiner endgültigen Arbeitsposition auf dem Rohr der Fig. 4 fixierten Sattel,

Fig. 8 eine Aufsicht auf den Prüfmanipulator in einer Zusammenstellung seiner Bauelemente, wie sie zur Prüfung einer im Zuge eines Rohrstranges gelegenen Schweißnaht verwendet wird,

Fig. 9 eine Schnittdarstellung längs der Linie IX-IX der Fig. 8,

Fig. 10 einen Schnitt längs der Linie X-X der Fig. 8,

Fig. 11 eine Aufsicht auf den auf den Schlittentisch der Fig. 8 montierten Prüfsystemträger,

Fig. 12 eine Ansicht des Prüfsystemträgers in einer gegenüber der Fig. 11 um 90° um die Rohrachse geschwenkten Position,

Fig. 13 eine Ansicht des Prüfsystemträgers der Fig. 11 und 12 von rechts,

Fig. 14 eine Schnittdarstellung längs der Linie XIV-XIV der Fig. 12 und

Fig. 15 eine Zusammenstellung der Bauelemente des Prüfmanipulators zur Prüfung sowohl vom im Rohrstrang gelegenen Schweißnähten als auch von Rohranschlußnähten unterschiedlichen Durchmessers.

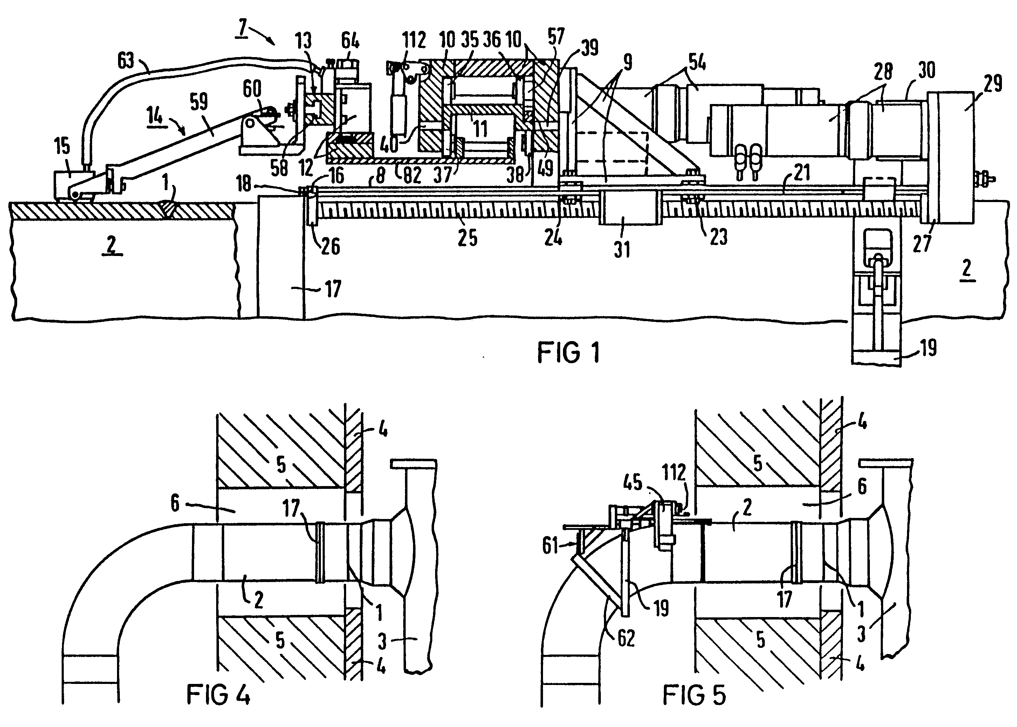

Die Zugänglichkeit von Rohranschlußnähten 1, insbesondere der Anschlußnähte der Kühlmittelrohre 2 am Reaktordruckbehälter 3 ist, wie aus Fig. 4 deutlich wird, sowohl durch den thermischen Schild 4 als auch durch den biologischen Schild 5 stark eingeschränkt. Die Rohranschlußnaht kann nur über den schmalen Ringspalt 6 zwischen dem Kühlmittelrohr 2 und dem biologischen und thermischen Schild erreicht werden. Bei diesen und ähnlichen Prüfbedingungen wird der Prüfmanipulator 7, wie in Fig. 1 dargestellt, aus einem auf dem zu prüfenden Rohr 2 aufsetzbaren Sattel 8, einem längs des Sattels verfahrbaren Schlitten 9, einem am Schlitten befestigbaren Segment 10, einem im Segment in Umfangsrichtung drehbar gelagerten Ring 11, einem am Ring montierten Prüfsystemträger 12, einem an letzterem gehaltenen Lineal 13 sowie am Lineal befestigten Prüfkopfhalterungen 14 (nur eine dargestellt), zusammengesetzt. Jede Prüfkopfhalterung trägt einen kardanisch aufgehängten Prüfkopf 15.

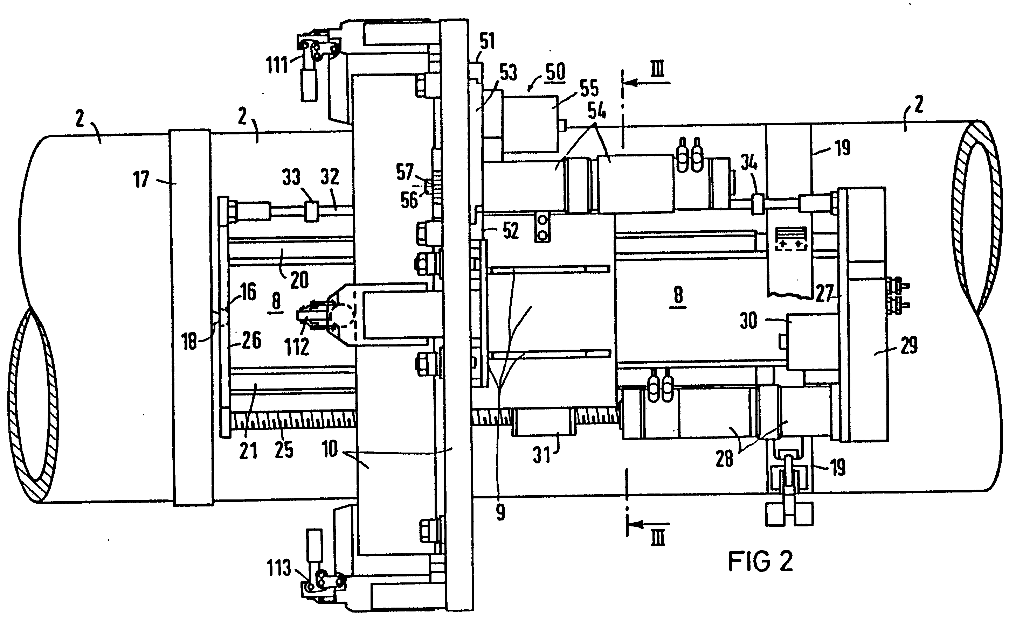

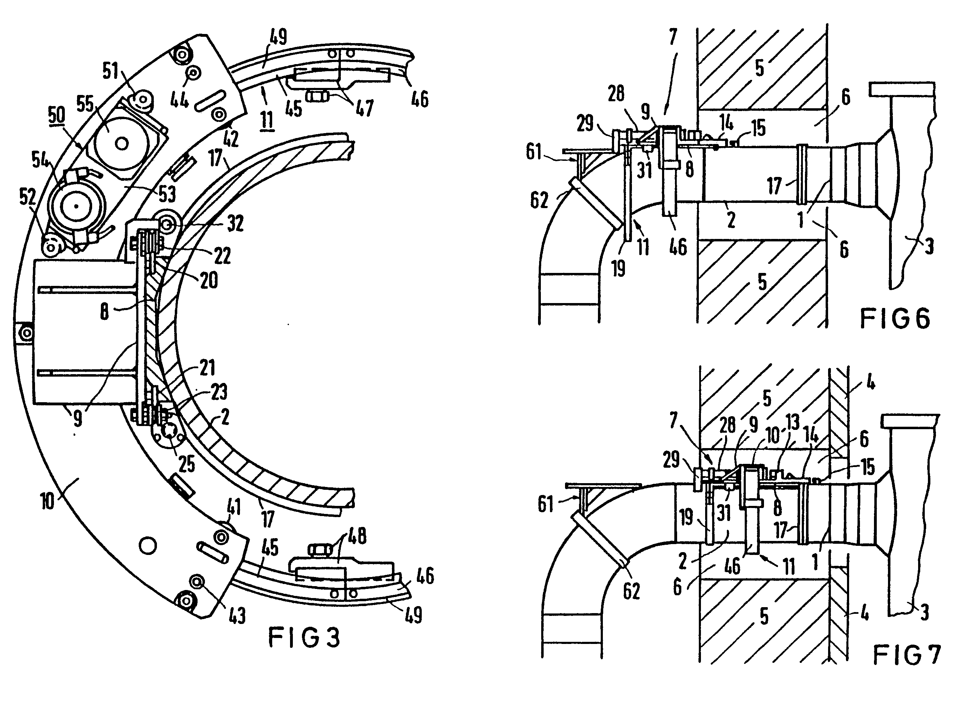

Die Fig. 1 und 3 verdeutlichen, wie der Sattel 8 unmittelbar auf dem zu prüfenden Rohr 2 aufliegt. Auf seiner den Prüfköpfen 15 zugewandten Seite trägt er eine Zentrierbohrung 16, die mit einem an einem fest am Rohr montierten Justierring 17 angebrachten Justierzapfen 18 in Eingriff bringbar ist. An seinem anderen Ende kann der Sattel über ein Spannband 19, das um das Rohr herumführbar ist, festgespannt werden. Der Sattel 8 trägt, wie die Fig. 2 und 3 zeigen, an seinen beiden Längsseiten je eine prismaartig geformte Schiene 20, 21, längs denen der Schlitten 9 über vier Rollen 22, 23, 24 (nur drei dargestellt) in Längsrichtung des Sattels verfahrbar ist. Parallel neben der einen Schiene 21 befindet sich eine Spindel 25, die an beiden Stirnplatten 26, 27 des Sattels 8 drehbar gelagert ist. Die Spindel 25 ist von einen an der einen Stirnplatte 27 des Sattels 8 angeflanschten Getriebemotor 28 antreibbar. Mit dem Getriebe 29 des Sattels ist ein Impulsgeber 30 gekuppelt. Die Spindel 25 trägt eine mit dem Schlitten 9 gekuppelte Spindelmutter 31. Parallel neben der anderen Schiene 20 ist, wie die Fig. 2 zeigt, eine Schaltstange 32 angeordnet, die an beiden Stirnplatten 26, 27 des Sattels 8 axial verschiebbar gelagert ist. Auf ihr sind zwei Anschläge 33, 34, die mit dem Schlitten in Eingriff bringbar sind, festgeklemmt.

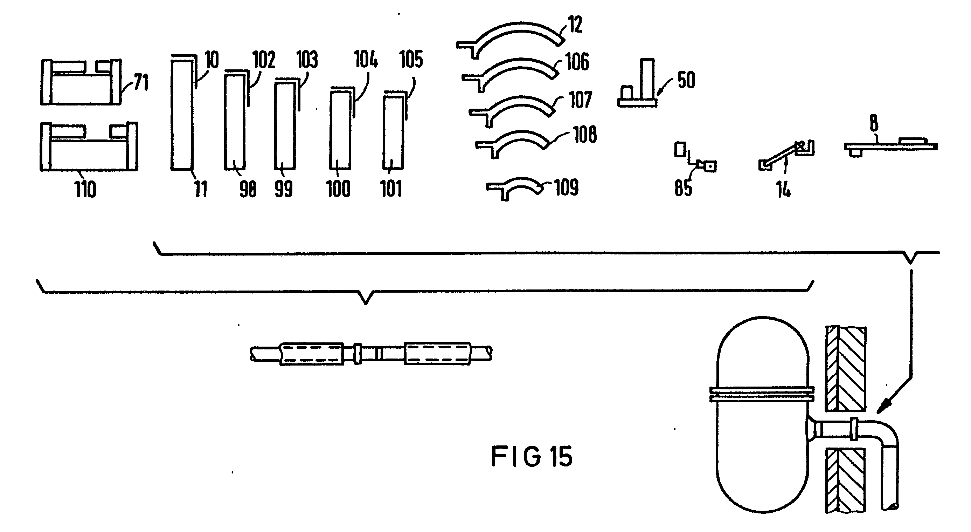

Wie die Fig. 1 und 2 außerdem verdeutlichen, ist das Segment 10 am Schlitten 9 angeflanscht. Dieses Segment hat einen U-förmigen Querschnitt. Es ist in einem Viertelkreis um das zu prüfende Rohr 2 gebogen. Im Innern des Segments 10 sind Kugellager 35, 36, 37, 38, 39, 40, 41, 42, 42, 44 angeordnet, zwischen denen der Ring 11 in Umfangsrichtung hindurchschiebbar gelagert ist. Dieser Ring ist, wie die Fig. 3 zeigt, aus zwei halbkreisförmigen Teilen 45, 46 zusammengesetzt, die mit Hilfe zweier Schnellspannverschlüsse 47, 48 miteinander verbindbar sind. Der Radius des Ringes 11 ist etwas größer als der Außenradius des größten damit zu untersuchenden Rohres. Wie anhand von Fig. 15 noch gezeigt wird, gehört zu jedem Ring 11 ein bestimmtes an dessen Radius angepaßtes Segment 10. Der Ring 11 hat einen U-förmigen Querschnitt (Fig. 1). Er trägt an seiner einen Seite einen umlaufenden Zahnkranz 49. Am Segment 10 ist eine Antriebsplatine 50 (Fig. 2) über zwei Klemmverschlüsse 51, 52 ankuppelbar. Die Antriebsplatine 50 besteht aus einer Platine 53, auf der ein Getriebemotor 54 zusammen mit einem Impulsgeber 55 fest aufmontiert sind. Auf der Antriebswelle 56 des Getriebes sitzt ein Zahnritzel 57, das mit dem Zahnkranz 49 des Ringes 11 kämmt.

Am Ring 11 ist, wie die Fig. 1 zeigt, ein Prüfsystemträger 12 montieret. An dem Prüfsystemträger ist ein sogenanntes Lineal 13 befestigt. Dieses Lineal, das parallel zum Ring 11 und ebenso wie dieses um die Symmetrieachse des Rohres 2 gekrümmt ist, besitzt eine Befestigungsnut 58 an der die Prüfkopfhalterungen 14 (in Fig. 1 nur eine dargestellt) mit ihren Prüfköpfen 15 befestigbar sind. Jede der Prüfkopfhalterungen besteht aus einem federbelasteten Schwenkarm 59, an der der eigentliche Prüfkopf 15 kardanisch angelenkt ist. Die Feder 60 des Schwenkarms 59 drückt den Prüfkopf gegen das Prüfobjekt.

Soll beispielsweise die Rohranschlußnaht 1 eines Kühlmittelrohres 2 an einem Rektordruckbehälter 3 mit dem Prüfmanipulator 7 geprüft werden, so ist es aus Gründen einer exakten Reproduzierbarkeit der Meßergebnisse zweckmäßig, einen sogenannten Justierring 17 in der Nähe der zu prüfenden Schweißnaht 1 an dem zu prüfenden Rohr fest anzumontieren. Dieser Justierring kann als flaches Band um das Rohr gespannt werden, so daß er nach Abschluß der Prüfarbeiten beim Wiedereinsetzen der Wärmedämmung unter letzterer verbleiben kann. Der Justierring 17 dient lediglich als Träger einer unverrückbaren Marke, im Ausführungsbeispiel der Fig. 1 und 2 eines Justierzapfens 18, der mit einer Zentrierbohrung 16 an der einen Stirnplatte 26 des Sattels 8 zentrierend in Eingriff bringbar ist. Durch Aufsetzen des Sattels auf das zu prüfende Rohr und das Ineingriffbringen der Zentrierbohrung 16 mit dem Justierzapfen 18 des Justierringes 17 wird eine stets reproduzierbare Positionierung des Sattels 8 des Prüfmanipulators 7 relativ zur Schweißnaht 1 gewährleistet. Damit wird die Voraussetzung geschaffen, die Meßergebnisse verschiedener Messungen exakt miteinander zu vergleichen.

In Fällen, in denen das Kühlmittelrohr 2, wie das im Ausführungsbeispiel der Fig. 4, 5 und 6 dargestellt ist, unmittelbar nach Austritt aus dem Reaktordruckbehälter 2 in einem abwärts gerichteten Krümmer übergeht, kann die Montage des Prüfmanipulators durch vorheriges Anbringen einer Hilfskonsole 61 (Fig. 5) erleichtert werden. Die Hilfskonsole ist über ein Spannband 62 am Krümmer zu befestigen. Sie ist lediglich eine Art gradliniger Verlängerung der Oberfläche des zu prüfenden Rohrabschnittes. Auf dieser Hilfskonsole 61 wird der Sattel 8 mitsamt dem Schlitten 9 zur Montage des Prüfmanipulators aufgelegt. An dem Schlitten war bereits das Segment 10 angeflanscht. In das Segment 10 wird ein halber Ringteil 45 eingeschoben. An diesem halben Ringteil ist zuvor der Prüfsystemträger 12 befestigt worden. Anschließend kann die Antriebsplatine 50 mit dem Getriebemotor 54 und dem Impulsgeber 55 am Segment 10 angeklemmt werden. Dabei gelangt deren Zahnritzel 57 mit dem Zahnkranz 49 des eingeschobenen Ringteils 45 in Eingriff und arretiert letzteren. Nunmehr kann das Lineal 13 mit den Prüfkopfhalterungen 14 und den Prüfköpfen 15 am Prüfsystemträger 12 montiert werden. Zuletzt werden die Prüfköpfe über Schläuche 63 (nur einer dargestellt) an einem am Prüfsystemträger befestigten Wasserverteiler 64 angeschlossen.

Wird der Sattel 8 soweit vorgeschoben, daß sich der Ring 11 über den geraden Rohrabschnitt befindet, so kann der andere Ringteil 46 mit den Schnellspannverschlüssen 47, 48 an den ersten bereits im Segment 10 befindlichen Ringteil 45 angekuppelt werden. Der derart vormontierte Prüfmanipulator 7 kann jetzt von der Hilfskonsole 61 aus in den Ringspalt 6 zwischen dem biologischen und thermischen Schild 4, 5 und dem Kühlmittelrohr 2 eingeschoben werden. Er wird soweit vorgeschoben, bis die vordere Stirnplatte 26 des Sattels 8 mit ihrer Zentrierbohrung 16 mit dem Justierzapfen 18 des Justierringes 17 in Eingriff gelangt ist. In dieser Stellung des Sattels wird das andere Ende des Sattels mit dem Spannband 19 am Rohr arretiert. Der Prüfmanipulator 7 ist nunmehr prüfbereit.

Nun kann der Getriebemotor 28 des Sattels 8 von einem hier nicht dargestellten, stahlengeschützt aufgestellten Bedienpult eingeschaltet werden. Durch ihn wird der Schlitten 9 mit dem Segment 10, dem Ring 11, dem Prüfkopfsystemträger 12 und den Prüfkopfhalterungen 14 über die Spindel 25 in axialer Richtung in den Ringspalt 6 eingefahren. Die jeweilige axiale Position der Prüfköpfe 15 ist über den mit dem Getriebe 29 gekuppelten Impulsgeber 30 am Bedienpult kontrollier- und reproduzierbar. Die jeweilige Position der Prüfköpfe in Umfangsrichtung ist durch Einschalten des am Segment 10 angeflanschten Getriebemotors 54 veränderbar. Sie ist über den an der Antriebsplatine 50 befestigten, mit dem Getriebemotor 54 gekuppelten Impulsgeber 55 exakt reproduzierbar. Somit sind die Prüfköpfe 15 bei der Wiederholungsprüfung stets wieder in exakt die gleiche Meßposition zu bringen. Die beiden Anschläge 33, 34, die an der Schaltstange 32 angeklemmt sind, dienen lediglich dazu, ein rechtzeitiges Abschalten des Getriebemotors 54 bei Annäherung des Schlittens 9 an die Stirnplatten 26, 27 des Sattels 8 sicherzustellen.

Soll eine im Rohrstrang 65 gelegene Schweißnaht 66 mit dem Prüfmanipulator 7 überprüft werden, so ist es wegen der in vielen Fällen den Rohrstrang umschließenden Wärmeisolation wünschenswert, daß der Prüfmanipulator in axialer Richtung so wenig Platz wie möglich benötigt, damit ein nur möglichst kurzes Stück der Wärmeisolation bzw. Wärmedämmung abgenommen werden muß. Zu diesem Zweck wird die eine Hälfte des aus zwei Teilen 45, 46 bestehenden Ringes 11 mittels Spannpratzen 67, 68 am zu untersuchenden Rohrstrang 65 vorzugsweise am Justierring 69 festgespannt. Dabei ist die eine Spannpratze 68 so ausgebildet, daß sie nur in definierter Position zum Justierzapfen 70 des Justierringes am Justierring 69 festspannbar ist. Auf dem so am Rohr 65 befestigten halben Ringteil 45 kann das Segment 10 aufgeschoben werden. Danach kann der zweite Ringteil 46 mittels der Schnellspannverschlüsse 47, 48 am ersten Ringteil 45 befestigt und über seine Spannpratzen (nicht dargestellt) ebenfalls am Justierring 17 festgeklemmt werden. An dem Segment 10 wird auch hier wiederum die Antriebsplatine 50 mit dem Getriebemotor 54 und dem Impulsgeber 55 so angeflanscht, daß dessen Zahnritzel 57 mit dem Zahnkranz 49 des Ringes 11 kämmt.

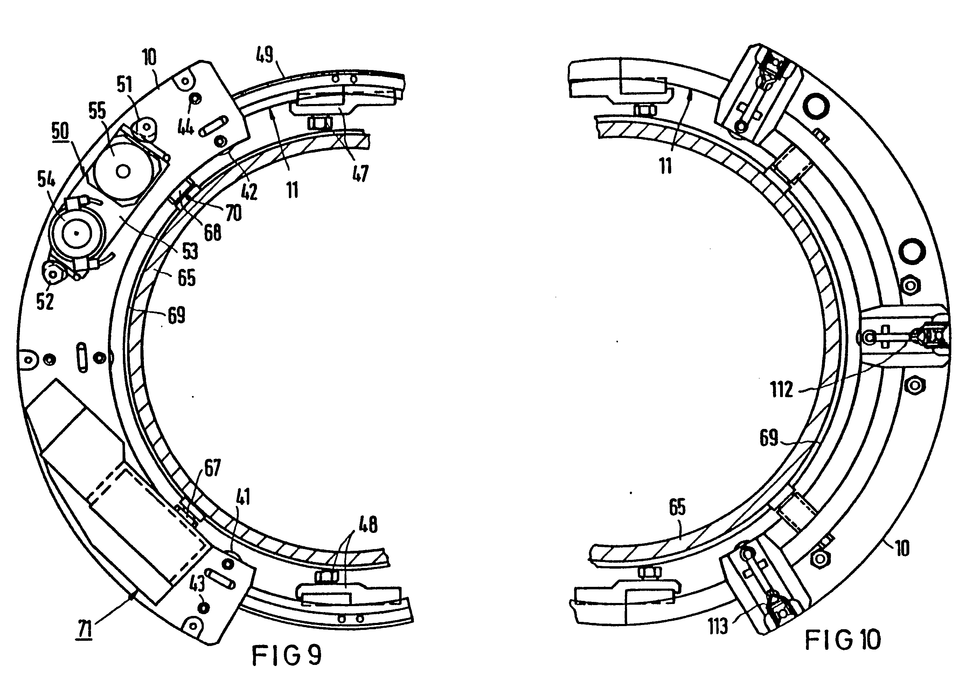

Anstelle des Schlittens 9 wird eine Auslegereinheit 71 am Segment 10 angeflanscht. Diese Auslegereinheit besteht, wie die Fig. 8 zeigt, aus zwei zueinander parallelen Stirnplatten 72, 73, die über zwei zur Rohrachse parallele Führungsstangen 74, 75 miteinander verbunden sind. Längs dieser Führungsstangen ist ein Schlittentisch 76 verschiebbar gelagert. Die Auslegereinheit 71 trägt eine parallel zu den beiden Führungsstangen 74, 75 ausgerichtete Spindel 77. Deren Spindelmutter (nicht sichtbar) ist mit dem Schlittentisch 76 gekuppelt. Die Spindel ist über einen Zahnriemenantrieb 78 mit einem an der einen Stirnplatte 72 befestigten Getriebemotor 79 gekuppelt. Am anderen Ende der Spindel 77 ist diese über einen weiteren Zahnriementrieb 80 mit einem Impulsgeber 81 verbunden.

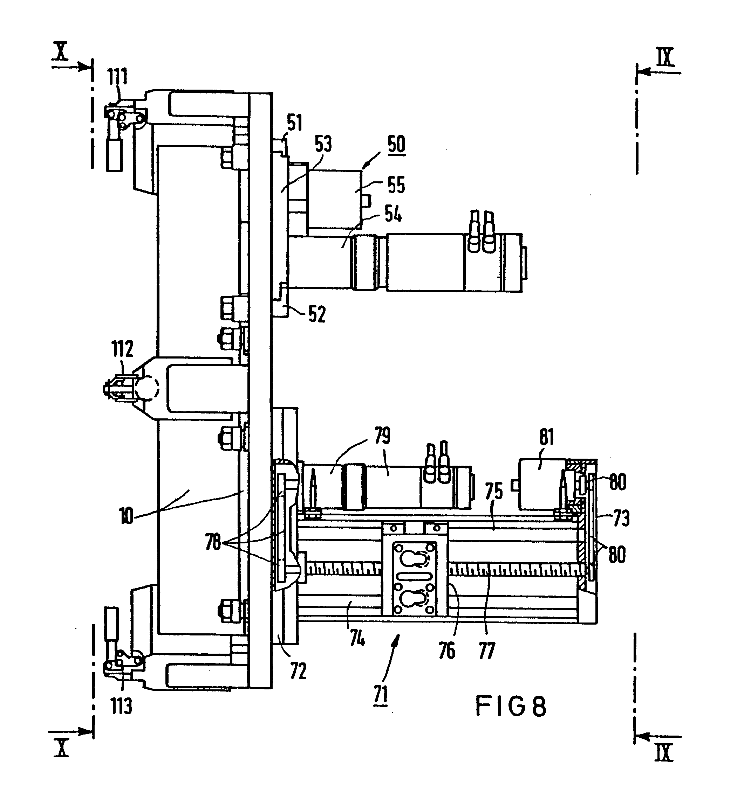

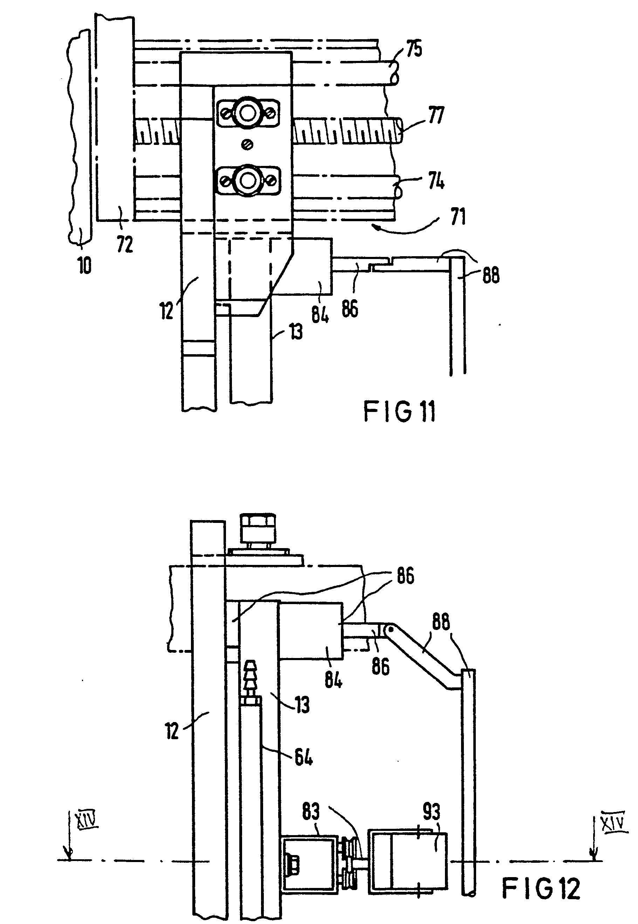

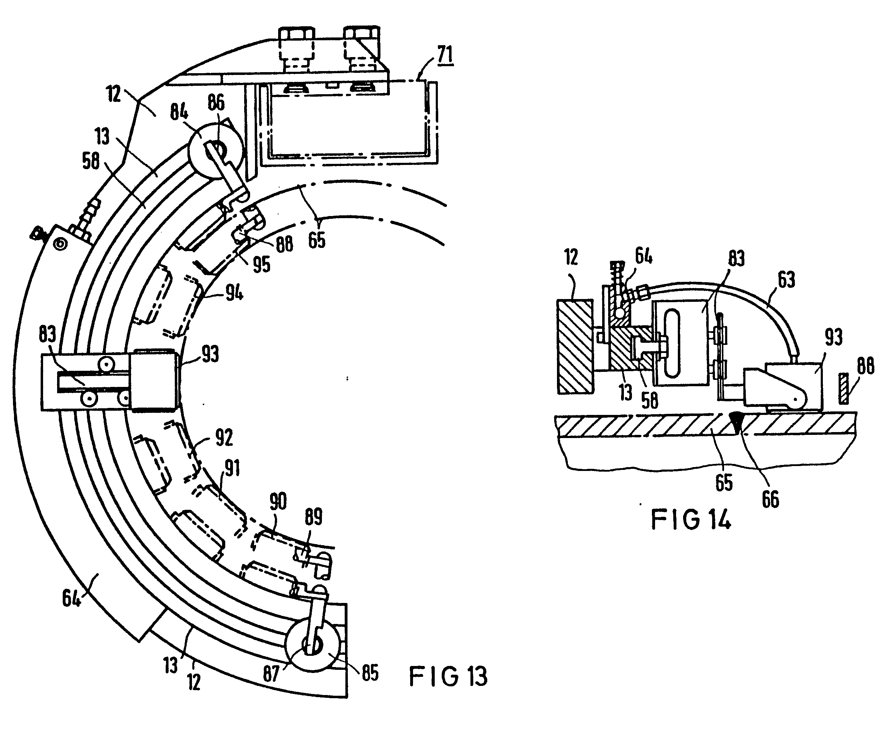

Auf dem in der Fig. 8 dargestellten Schlittentisch 76 ist der Prüfsystemträger 12 anschraubbar. Zuvor kann seine hier nicht benötigte Trägerplatte 82 abgeschraubt werden. Die Bestückung des Prüfsystemträgers 12 ist in den Fig. 11 bis 14 im einzelnen dargestellt. Der Prüfsystemträger ist ähnlich dem Segment 10 um etwa einen Vierteilkreis um den Außenumfang des größtmöglichen damit zu prüfenden Rohres herumgebogen. Er trägt das Lineal 13, das mit dem Lineal der Fig. 1 und 2 identisch ist. An diesem Lineal sind die anhand der Fig. 14 im einzelnen beschriebenen Prüfkopfhalterungen 83 (nur eine dargestellt) befestigt. Außerdem sind zwei Schalter 84, 85 am Prüfsystemträger befestigt. An deren Stellorganen 86, 87 ist je ein Abschaltrahmen 88, 89 gehaltert. Die Abschaltrahmen sind, wie die Fig. 12 und 14 zeigen, parallel zum Segment 10 um den Aussenumfang des zu prüfenden Rohres 65 herum gekrümmt. Sie sind den am Rohr anliegenden Prüfköpfen 90, 91, 92, 93, 94, 95 auf ihrer dem Segment 10 abgewandten Seite vorgelagert.

In den Fig. 12 und 14 erkennt man nicht nur die Führung der Abschaltrahmen 88, 89 vor den Prüfköpfen, sondern auch deren kardanische Lagerung an kurzen in der Befestigungsnut 58 des Lineals 13 festgeschraubten Prüfkopfhalterungen 83. Auf dem Prüfsystemträger 12 ist auch in diesem Fall ein

4

Wasserverteiler 63 montiert. Von diesem sind Wasserschläuche 97 (nur einer dargestellt) zu den einzelnen Prüfköpfen geführt. Weitere, der Übersicht halber hier nicht dargestellte Wasserabsaugleitungen führen von den einzelnen Prüfköpfen zu anderen Anschlüssen des Wasserverteilers 63.

Soll eine im Rohrstrang 65 gelegene Schweißnaht 66 geprüft werden so ist die Position des Segments 10 infolge der Befestigung des Ringes 11 am Justierring 17 in axialer Richtung definiert. Damit ist aber die axiale Ausgangsposition der Prüfköpfe 90 bis 95 nur noch vom Vorschub des Schlittentisches 76 abhängig. Dieser ist jedoch über den Impulsgeber 81 der Auslegereinheit 71 jederzeit exakt reproduzierbar und am entfernten Bedienpult anzeigbar. Auch die Position des Ringes 11 in Umfangsrichtung ist durch die Zentrierung einer bestimmten Spannpratze 68 am Justierzapfen des Justierringes 69 definiert. In Verbindung mit einer am Ring 11 angebrachten, hier nicht weiter dargestellten, mit dem Segment 10 bei dessen Verschiebung in Umfangsrichtung koordinierbaren Marke ist damit auch die Ausgangsposition des Segmentes 10 in Umfangsrichtung des Ringes 11 definiert. Eine bestimmte Position des Segmentes 10 und damit der Prüfköpfe 90 bis 95 in Umfangsrichtung ist dann über den Impulsgeber 55 der Antriebsplatine 50 jederzeit reproduzierbar. Voraussetzung dafür ist allerdings die Befestigung der Prüfkopfhalterungen 83 an stets den gleichen Stellen des Lineals 13.

Bei der Inbetriebnahme des Prüfmanipulators 7 können daher die Prüfköpfe 90 bis 95 ausgehend von der eingangs definierten Ausgangslage durch Einschalten des an der Antriebsplatine 50 befestigten Getriebemotors 54 über das sich am Zahnkranz 49 des Ringes 11 abwälzende und das Segment 10 dabei mitnehmende Zahnritzel 57 in Umfangsrichtung um das Rohr 65 geführt werden. Dabei läßt sich die jeweils gerade erreichte Position anhand der vom Impulsgeber 55 der Antriebsplatine 50 am entfernten Bedienpult übermittelten Impulszahl ablesen. In ähnlicher Weise können die Prüfköpfe 90 bis 95 durch Einschalten des an der Auslegereinheit 71 angeflanschten Getriebemotors 79 von der Ausgangslage aus in axialer Richtung verschoben werden. Dabei dreht der Getriebemotor die Spindel 77 und verschiebt dabei über die Spindelmutter den Schlittentisch 76. Die jeweilige Lage der Prüfköpfe in axialer Richtung kann über den von der Spindel 77 mit angetriebenen Impulsgeber 81 am entfernt aufgestellten Bedienpult angezeigt werden. Auf diese Weise ist jedes Prüfkopfsignal einem bestimmten geometrischen Ort auf dem Rohr 65 zuzuordnen und mit dem entsprechenden Prüfsignal einer früheren Messung zu vergleichen. Ein besonderer Vorteil dieser anhand der Fig. 8 bis 14 erläuterten Zusammensetzung des Prüfmanipulators 7 ist es, daß die Wärmeisolierung bei einem wärmeisolierten Rohr nur in einem Bereich entfernt zu werden braucht, der im wesentlichen der für die Überprüfung der Schweißnaht erforderlichen axialen Verschiebung der Prüfköpfe, d.h. der Länge der Auslegereinheit 71 zuzüglich der Breite des Segments 10 in axialer Richtung entspricht.

Die Fig. 15 zeigt in einer schematischen Übersicht die einzelnen zur Lösung einer zugrunde gelegten Prüfungsaufgabe miteinander zu kombinierenden Bauelemente des Prüfmanipulators 7. So sind die Ringe 11, 98, 99, 100, 101, die Segmente 10, 102, 103, 104, 195 und Prüfsystemträger 12, 106, 107, 108, 109 für verschiedene Rohrdurchmesserbereiche ausgelegt. Die Prüfsystemträger jeweils eines bestimmten Rohrdurchmesserbereichs passen zu den Segmenten 10 und diese wieder zu den Ringen 11 des gleichen Durchmesserbereichs. Es sind mehrere, im Ausführungsbeispiel, zwei Auslegereinheiten 71, 110 mit unterschiedlichem langen Hub für die Untersuchung von unterschiedlich starken Rohren vorgesehen. Die Auslegeeinheit und die Antriebsplatine 50 passen an alle Prüfsystemträger. Für die Prüfung von Rohranschlußnähten ist ein Sattel 8 nebst zugehörem Schlitten 9 vorgehesen, der ebenfalls an alle Prüfsystemträger ankuppelbar ist. Nur für in ihrem Durchmesser stark abweichende Rohrdurchmesser könnte ein weiterer Sattel (nicht dargestellt) verwendet werden. Die in den Fig. 1 und 14 gezeigten Prüfkopfhalterungen 14, 83, passen an die Lineale 13 (nur für einen Rohrdurchmesser dargestellt) der zugehörigen Prüfsystemträger 12, 106, 107, 108, 109. Sie sind untereinander austauschbar.

Bei einer vorzunehmenden Prüfaufgabe wird daher zunächst der Ring 11, 98 bis 101 des entsprechenden Durchmesserbereichs mit dem zugehörigen Segment 10, 102 bis 105 gewählt. Zu diesem Segment wird der passende Prüfsystemträger 12, 106 bis 109 gewählt. Bei Rohranschlußnähten wären Sattel 8 und lange Prüfkopfhalterungen 14 sonst Auslegereinheit 71, 110 und kurze Prüfkopfhalterung 83 sowie die stets kompatible Antriebsplatine 50 bereit zu legen. Der Prüfmanipulator 7 kann dann, wie anhand der Figurenbeispiele 1 bis 7, bzw. 8 bis 14 erläutert wurde, am Prüfort den jeweiligen lokalen Gegebenheiten entsprechend in der einen oder anderen Weise zusammengebaut werden.

Es ist ein großer Vorteil dieser Konstruktion, daß man mit nur wenigen miteinander kompatiblen Bauteilen relativ schnell vor Ort einen Prüfmanipulator 7 zusammenstellen kann, der an jeweils eine ganz spezielle Prüfaufgabe angepaßt ist. Dabei ist der Zusammenbau des Prüfmanipulators durch die weitgehende Verwendung von Schnellspannverschlüssen 47, 48 oder Klemmverschlüssen 51, 52 stark vereinfacht. Auch das Einfädeln des jeweils einen Ringteils 45, 46 in das zugehörige Segment 10 läßt sich in vielen Fällen dadurch noch weiter erleichtern, daß die Segmente 10 zweiteilig ausgebildet werden und die eine Seite jedes Segments 10 über Kniehebelspanner 111, 112, 113 (Fig. 8) an den übrigen Teil geklemmt wird. Dies erlaubt es, das Segment 10 auch seitlich auf den Ring 11 aufzuschieben. Ein weiterer Vorteil ist es, daß mit diesem Prüfmanipulator, definierte, exakt reproduzierbare Positionierungen der Prüfköpfe von einem entfernten Bedienpult durchführbar sind. Als Prüfköpfe sind hierbei gleichermaßen Ultraschallschwingköpfe, Wirbelstromsonden und Detektoren für Gammastrahlung einsetzbar.

# 0 134 534

## Bezugszeichenliste

| | | | |
|---|---|---|---|
| Schweißnaht (Rohranschlußnaht) | 1 | Antriebswelle | 56 |
| Rohr | 2 | Zahnritzel | 57 |
| Reaktordruckbehälter | 3 | Befestigungsnut | 58 |
| thermischer Schild | 4 | Schwenkarm | 59 |
| biologischer Schild | 5 | Feder | 60 |
| Ringspalt | 6 | Hilfskonsole | 61 |
| Prüfmanipulator | 7 | Spannband | 62 |
| Sattel | 8 | Schlauch | 63 |
| Schlitten | 9 | Wasserverteiler | 64 |
| Segment | 10 | Rohrstrang | 65 |
| Ring | 11 | Schweißnaht | 66 |
| Prüfsystemträger | 12 | Spannpratze | 67, 68 |
| Lineal | 13 | Justierring | 69 |
| Prüfkopfhalterung | 14 | Justierzapfen | 70 |
| Prüfkopf | 15 | Auslegereinheit | 71 |
| Zentrierbohrung | 16 | Stirnplatte | 72, 73 |
| Justierring | 17 | Führungsstange | 74, 75 |
| Justierzapfen | 18 | Schlittentisch | 76 |
| Spannband | 19 | Spindel | 77 |
| Schiene | 20, 21 | Zahnriemenantrieb | 78 |
| Rolle | 22, 23, 24 | Getriebemotor | 79 |
| Spindel | 25 | Zahnriemenantrieb | 80 |
| Stirnplatten | 26, 27 | Impulsgeber | 81 |
| Getriebemotor | 28 | Trägerplatte | 82 |
| Getriebe | 29 | Prüfkopfhalterung | 83 |
| Impulsgeber | 30 | Schalter | 84, 85 |
| Spindelmutter | 31 | Schaltorgan | 86, 87 |
| Schaltstange | 32 | Abschaltrahmen | 88, 89, |
| Anschlag | 33, 34 | Prüfkopf | 15, 90, 91, 92, |
| Kugellager | 35, 36, 37, 38, | | 93, 94, 95 |
| | 39, 40, 41, 42, | Wasserschlauch | 97 |
| | 43, 44 | Laufring | 11, 98, 99, 100 |
| Ringteil | 45, 46 | | 101 |
| Schnellspannverschluß | 47, 48 | Führungsring | 10, 102, 103, |
| Zahnkranz | 49 | | 104, 105 |
| Antriebsplatine | 50 | Prüfsystemträger | 12, 106, 107, |
| Klemmverschluß | 51, 52 | | 108, 109, |
| Platine | 53 | Auslegereinheit | 71, 110 |
| Getriebemotor | 54 | Kniehebelspanner | 111, 112, 113 |
| Impulsgeber | 55 | | |

## Patentansprüche

1. Außen an einem Rohr (2) ansetzbarer Prüfmanipulator, vorzugsweise zum Ultraschallprüfen von Schweißnähten (1), enthaltend einen in Umfangs- und Achsrichtung am Rohr (2) verfahrbaren Prüfsystemträger (12, 106 bis 109), mindestens eine an diesem befestigbare Prüfkopfhalterung (14, 93), eine Antriebs- und Positioniereinrichtung, einen das zu prüfende Rohr (2) umschließenden, geteilten Ring (11, 98 bis 101), der mit Befestigungsmitteln für den Prüfsystemträger (12, 106 bis 109) und Spannpratzen (67, 68) ausgestaltet ist und dem ein Segment (10, 102 bis 105) zugeordnet ist, das mit Mitteln zum Anflanschen entweder einer Auslegereinheit (71, 110) oder eines auf einem Sattel (8) axial zum Rohr verfahrbaren Schlittens (9) ausgestaltet ist, wobei Ring (11, 98 bis 101) und Segment (10, 102 bis 105) relativ zueinander bewegbar sind, bei der Prüfung von im Rohrstrang (65) gelegenen Schweißnähten (66) der Ring (11, 98 bis 101) über die Spannpratzen (67, 68) unmittelbar am zu prüfenden Rohr zu einer am Rohr befestigten Justiermarke (70) zentriert befestigbar und die Auslegereinheit (71, 110) mitsamt dem Prüfsystemträger (12, 106 bis 109) und der Prüfkopfhalterung (14, 83) an dem längs des Umfangs des Ringes (11, 98 bis 101) verschiebbar gelagerten Segment (10, 102 bis 105) anflanschbar ist oder alternativ bei der Prüfung von sogenannten Rohranschlußnähten der Ring (11, 98 bis 101) mit dem daran befestigten Prüfsystemträger (12, 106 bis 109) am Segment (10, 102 bis 105) in Umfangsrichtung um das Rohr drehbar gelagert ist und das Segment an dem Schlitten (9) befestigt ist, der auf dem zu einer am Rohr befestigten Justiermarke (18) zentriert am Rohr (2) befestigbaren Sattel (8) angeordnet ist.

6

2. Prüfmanipulator nach Anspruch 1, dadurch gekennzeichnet, daß an unterschiedliche Rohrdurchmesser angepaßte Ringe (11, 98 bis 101), Segmente (10, 102 bis 105) und Prüfsystemträger (12, 106 bis 109) vorgesehen sind, an die die übrigen Bauelemente, wie Antriebs und Positioniereinheit (50), Sattel (8) und Auslegereinheit (71, 110) passen.

3. Prüfmanipulator nach Anspruch 1, dadurch gekennzeichnet, daß mehrere Auslegereinheiten (71, 110) mit unterschiedlich langem Hub vorgesehen sind, die an allen Prüfsystemträgern (12, 106 bis 109) anflanschbar sind.

4. Prüfmanipulator nach Anspruch 2 oder 3, dadurch gekennzeichnet, daß der Sattel (8), der Schlitten (9), das Segment (10, 102 bis 105), der Ring (11, 98 bis 101), der Prüfsystemträger (12, 106 bis 109), die Prüfkopfhalterung (14, 83), eine Antriebsplatine (50), die Auslegereinheit (71, 110) über Schnellverschlüsse (47 bzw. 48 bzw. 51 bzw. 52 bzw. 111 bzw. 112 bzw. 113) miteinander verbindbar sind.

5. Prüfmanipulator nach Anspruch 1, dadurch gekennzeichnet, daß die Prüfkopfhalterung (14, 83) an der am Segment (10, 102 bis 105) befestigten Auslegereinheit (71, 110) parallel zur Achse des zu prüfenden Rohres (65) verschiebbar ist.

6. Prüfmanipulator nach Anspruch 5, dadurch gekennzeichnet, daß die Auslegereinheit (71, 110) eine parallel zur Achse des Rohres (65) ausgerichtete Spindel (77) trägt und die Prüfkopfhalterung (14, 83) über eine Spindelmutter verstellbar ist.

7. Prüfmanipulator nach Anspruch 6, dadurch gekennzeichnet, daß die Spindelmutter über einen mit einem Impulsgeber (81) gekuppelten Getriebemotor (79) verstellbar ist.

8. Prüfmanipulator nach Anspruch 1, dadurch gekennzeichnet, daß das Segment (10, 102 bis 105) über ein mit dem Zahnkranz (49) des Ringes (11, 98 bis 101) kömmendes Zahnritzel (57) relativ zum Ring verstellbar ist.

9. Prüfmanipulator nach Anspruch 8, dadurch gekennzeichnet, daß das Zahnritzel (57) über einen Getriebemotor (54) antreibbar ist, der zusammen mit einem Impulsgeber (55) am Segment (10, 102 bis 105) anklemmbar ist.

10. Prüfmanipulator nach Anspruch 1, dadurch gekennzeichnet, daß ein Justierzapfen (18) als Justiermarke an einem um das zu prüfende Rohr festspannbaren Justierring (17) verwendet wird.

11. Prüfmanipulator nach Anspruch 10, dadurch gekennzeichnet, daß der Justierring (17) zur Aufnahme der Wärmedehnung über Tellerfedern vorspannbar ist.

12. Prüfmanipulator nach Anspruch 1 oder 2, dadurch gekennzeichnet, daß eine auf einem Rohrstutzen bzw. einem nach unten gebogenen Rohrkrümmer aufspannbare Hilfskonsole (61) für den Zusammenbau der jeweils benötigten Bauelemente vorgesehen ist.

## Claims

1. A test manipulator which can be externally attached to a pipe (2), especially for the ultrasonic testing of welding seams (1), comprising a test system carrier (12, 106 to 109) which can be moved at the pipe (2) in the peripheral and axial directions, at least one test head holder (14, 93) which can be fastened to said carrier, a drive and positioning device, a divided ring (11, 98 to 101) which surrounds the pipe (2) to be tested and is provided with fastening means for the test system carrier (12, 106 to 109) and clamping shoes (67, 68) and to which is allotted a segment (10, 102 to 105) which is provided with means for the attachment by means of flanges of either a bracket unit (71, 110), or a slide (9) which can be moved axially in relation to the pipe on a saddle (8), where the ring (11, 98 to 101) and segment (10, 102 to 105) are movable with respect to one another, where during the testing of welding seams (66) in the pipe length (65), the ring (11, 98 to 101) can be directly attached through the clamping shoes (67, 68) to the pipe to be tested, centred in relation to an adjustment mark (70) fixed to the pipe, and the bracket unit (71, 110), together with the test system carrier (12, 106 to 109) and the test head holder (14, 83), can be attached by means of flanges to the segment (10, 102 to 105) which is mounted so as to be displaceable along the periphery of the ring (11, 98 to 101),

or alternatively, in the testing of so-called pipe connection seams, the ring (11, 98 to 101), together with the test system carrier (12, 106 to 109) fastened thereto, is mounted on the segment (10, 102 to 105) so as to be rotatable in the peripheral direction about the pipe, and the segment is attached to the slide (9) which is arranged on the saddle (8), which can itself be attached to the pipe (2), centred in relation to an adjustment mark (18) attached to the pipe.

2. A test manipulator as claimed in Claim 1, characterised in that rings (11, 98 to 101), segments (10, 102 to 105) and test system carriers (12, 106 to 109), adapted to different pipe diameters, are provided, to which the other components, such as drive and positioning units (50), saddle (8) and bracket unit (71, 110), are fitted.

3. A test manipulator as claimed in Claim 1, characterised in that a plurality of bracket units (71, 110) having different ranges of movement are provided and can be attached by means of flanges to all the test system carriers (12, 106 to 109).

4. A test manipulator as claimed in Claim 2 or 3, characterised in that the saddle (8), the slide (9), the segment (10, 102 to 105), the ring (11, 98 to 101), the test system carrier (12, 106 to 109), the test head holder (14, 83), a drive plate (50) and the bracket unit (71, 110) can be connected to one another by means of quick fasteners (47; 48; 51; 52; 111; 112; 113).

5. A test manipulator as claimed in Claim 1, <u>characterised in</u> that the test head holder (14, 83) can be displaced on the bracket unit (71, 110), which is attached to the segment (10, 102 to 105), parallel to the axis of the pipe (65) to be tested.

6. A test manipulator as claimed in Claim 5, <u>characterised in</u> that the bracket unit (71, 110) carries a spindle (77), aligned parallel to the axis of the pipe (65), and the test head holder (14, 83) is adjustable through a spindle nut.

7. A test manipulator as claimed in Claim 6, <u>characterised in</u> that the spindle nut is adjustable by means of a drive motor (79) which is coupled to a pulse generator (81).

8. A test manipulator as claimed in Claim 1, <u>characterised in</u> that the segment (10, 102 to 105) is adjustable with respect to the ring through a pinion (57) which mates with the toothed rim (49) of the ring (11, 98 to 101).

9. A test manipulator as claimed in Claim 8, <u>characterised in</u> that the pinion (57) can be driven by means of a drive motor (54) which, together with a pulse generator (55), can be clamped to the segment (10, 102 to 105).

10. A test manipulator as claimed in Claim 1, <u>characterised in</u> that an adusting pin (18) is used as an adjustment mark on an adjustment ring (17) which can be fixed around the pipe to be tested.

11. A test manipulator as claimed in Claim 10, <u>characterised in</u> that the adjustment ring (17) can be prestressed through cup springs in order to take up the expansion due to heating.

12. A test manipulator as claimed in Claim 1 or 2, <u>characterised in</u> that an auxiliary bracket (61) which can be clamped to a tubular socket, or to a downwards-bent pipe bend, is provided for the assembly of the requisite components.


## Revendications

1. Manipulateur de contrôle pouvant être monté extérieurement sur un tuyau (2), de préférence pour réaliser le contrôle ultrasonore de cordons de soudure (1), et contenant un support (12, 106 à 109) du système de contrôle, pouvant être déplacé suivant la direction circonférentielle et suivant la direction axiale sur le tuyau (2), au moins un organe (14, 93) de maintien d'une tête de contrôle, pouvant être fixé sur ce support, un dispositif d'entraînement et de positionnement, une bague subdivisée (11, 98, 101), qui entoure le tuyau à contrôler (2) et qui est pourvue de moyens de fixation pour un support (12, 106 à 109) du système de contrôle et de griffes de serrage (67, 68) et à laquelle est associé un segment (10, 102 à 105), qui comporte des moyens pour le raccordement par bride soit d'une unité formant console (71, 110), soit d'un chariot (9) déplaçable axialement par rapport au tuyau sur une selle (8), et dans lequel l'anneau (11, 98 à 101) et le segment (10, 102 à 105) sont déplaçables l'un par rapport à l'autre, et, lors du contrôle de cordons de soudure (66) disposés dans la ligne de tuyaux (65), la bague (11, 98 à 101) peut être fixée au moyen des griffes de serrage (67, 68) en étant centrée directement sur le tuyau à contrôler, par rapport à un repère d'ajustement (70) fixé sur le tuyau et l'unité formant console (71, 110) peut être raccordée par bride ainsi que le support (12, 106 à 109) du système de contrôle et l'organe (14, 83) de soutien de la tête de contrôle, sur le segment (10, 102 à 105) monté de manière à être déplaçable le long de la périphérie de la bague (11, 98 à 101) ou bien, sinon, lors du contrôle de ce qu'on appelle des cordons de raccordement de tuyaux, la bague (11, 98 à 101) munie du support (12, 106 à 109) du système de contrôle, qui est fixé sur cette bague, est montée sur le segment (10, 102 à 105) de manière à pouvoir tourner dans la direction circonférentielle autour du tuyau et le segment est fixé sur le chariot (9), qui est monté sur la selle (8) pouvant être fixée sur le tuyau (2), en étant centrée par rapport à une marque d'ajustement (18) fixée sur le tuyau.

2. Manipulateur de contrôle selon la revendication 1, caractérisé par le fait qu'il est prévu des bagues (11, 98 à 101), des segments (10, 102 à 105) et des supports (12, 106 à 109) du système de contrôle, qui sont adaptés à différents diamètres de tuyaux et auxquels s'adaptent les autres composants, comme par exemple l'unité d'entraînement et de positionnement 50, la selle (8) et l'unité formant console (71, 110).

3. Manipulateur de contrôle suivant la revendication 1, caractérisé par le fait qu'il est prévu plusieurs unités formant consoles (71, 110) possédant des courses de longueurs différentes, et qui peuvent être raccordées par bride à tous les supports (12, 106 à 109) du système de contrôle.

4. Manipulateur de contrôle suivant la revendication 2 ou 3, caractérisé par le fait que la selle (8), le chariot (9), le segment (10, 102 à 105), la bague (11, 98 à 101), le support (12, 106 à 109) du système de contrôle, l'organe (14, 83) de soutien de la tête de contrôle, une platine d'entraînement (50), l'unité formant console (71, 110) peuvent être reliés entre eux par l'intermédiaire de dispositifs de fermeture rapide (47 ou 48 ou 51 ou 52 ou 111 ou 112 ou 113).

5. Manipulateur de contrôle suivant la revendication 1, caractérisé par le fait que l'organe (14, 83) de soutien de la tête de contrôle est déplaçable sur l'unité formant console (71, 110) fixée sur le segment (10, 102 à 105), parallèlement à l'axe du tuyau (105) à contrôler.

6. Manipulateur de contrôle suivant la revendication 5, caractérisé par le fait que l'unité formant console (71, 110) comporte une broche (77) parallèle à l'axe du tuyau (65) et que l'organe (14, 83) de soutien de la tête de contrôle est déplaçable au moyen d'un écrou de broche.

7. Manipulateur de contrôle suivant la revendication 6, caractérisé par le fait que l'écrou de broche est déplaçable au moyen d'un moto-réducteur (79) accouplé à un générateur d'impulsions (81).

8. Manipulateur de contrôle suivant la revendication 1, caractérisé par le fait que le segment (10, 102 à 105) est déplaçable par rapport à la bague, par l'intermédiaire d'un pignon (57) engrenant avec la couronne dentée (49) de la bague (11, 98 à 101).

9. Manipulateur de contrôle suivant la revendication 8, caractérisé par le fait que le pignon (57) peut être entraîné par l'intermédiaire d'un moto-réducteur (54), qui peut être fixé par blocage, ainsi qu'un générateur d'impulsions (55), sur le segment (10, 102 à 105).

10. Manipulateur de contrôle suivant la revendication 1, caractérisé par le fait qu'on utilise un ergot d'ajustement (18) en tant que repère d'ajustement, sur une bague d' ajustement (17) pouvant être bloquée par serrage autour du tuyau à contrôler.

11. Manipulateur de contrôle suivant la revendication 10, caractérisé par le fait que la plaque d'ajustement (17) peut être précontrainte par l'intermédiaire de rondelles-ressorts, de manière à absorber la dilatation thermique.

12. Manipulateur de contrôle suivant la revendication 1 ou 2, caractérisé par le fait qu'il est prévu une console auxiliaire (61), qui peut être bloquée par serrage sur un tuyau tubulaire ou sur un coude de tuyau recourbé vers le bas, pour l'assemblage des composants respectivement nécessaires.

FIG 1

FIG 4

FIG 5

0 134 534

FIG 2

FIG 6

FIG 7

FIG 3

FIG 10

FIG 9

FIG 8

FIG 11

FIG 12

FIG 14

FIG 13

13

FIG 15